# EUROPEAN PATENT SPECIFICATION

(11) **EP 3 113 507 B1**
(45) Date of publication and mention of the grant of the patent: **21.11.2018**
(21) Application number: 16177768.5
(22) Date of filing: 04.07.2016
(51) Int. Cl.: H04R 1/10, H04B 7/00, H04M 1/05, H04M 1/60, H04R 27/00

(54) **A METHOD AND TRANSMITTER FOR BROADCASTING AN AUDIO SIGNAL TO AT LEAST ONE HEADPHONE AND A HEADPHONE**
VERFAHREN UND SENDER ZUR ÜBERTRAGUNG EINES AUDIOSIGNALS AN MINDESTENS EINEN KOPFHÖRER UND KOPFHÖRER
PROCÉDÉ ET ÉMETTEUR POUR DIFFUSER UN SIGNAL AUDIO D'AU MOINS UN ÉCOUTEUR ET UN CASQUE

(30) Priority: 03.07.2015 NL 2015088
(43) Date of publication of application: 04.01.2017
(73) Proprietor: Leendert Hogenes Beheer B.V., 1312 NR Almere (NL)
(72) Inventor: HOGENES, Leendert, 1312 NR Almere (NL); SOUSA, Alexandre José Cavaco da Silva, 2860-128 Alhos Vedros (PT); MUCHAXO, António Manuel Pedroso, 2755-075 Alcabideche (PT)
(74) Representative: de Hoog, Johannes Hendrik

(56) References cited:
- EP-A1- 2 541 882
- US-A1- 2004 157 555
- US-A1- 2005 201 569
- US-B1- 8 861 744

## Description

### TECHNICAL FIELD

The invention relates to a method for broadcasting an audio signal to at least one headphone. The method further relates to a transmitter for broadcasting an audio signal to at least one headphone and a headphone.

### BACKGROUND

Events, festivals, shows, public entertainment mostly produces a lot of sound. To avoid noise nuisance to the neighbourhood, the events has to comply with noise regulations. As a result of this the intensity of the produced sound has to be decreased. To give audience access to content, such as audio, the broadcasted signal may only be received by a selected group of individuals, instead of everyone.

A solution to avoid noise nuisance or give individuals access to broadcasted audio is to have Sound Input Per Person, SIPP abbreviated. There are events where people listen to music or audio listened to on wireless headphones or receivers. Instead of using a public speaker system, the audio is broadcasted via a radio transmitter with the signal being picked up by wireless headphone receivers worn by the participants.

Such systems broadcasting audio to multiple headphones enables to have more than one audio source in one room, for example a performance of an artist and an interview with another artist. It might also be possible that different compositions of a band are wirelessly transmitted to headphones. It might be possible to transmit a real version wherein all members of the band have a loudness corresponding to the live performance, a version wherein the sound of a particular music instrument is amplified, so that the listener can easily focus on the performance of said instrument or artist.

US2005/0201569 discloses an all-in-one headset with a communication unit having selectable at least two communication channels and selectable at least two communication modes. The headset further comprises an indication unit comprising a red and a green LED for indicating an indication indicative of the selected communication channel and the selected communication mode.

US2004/0157555A1 discloses a wireless audio distribution system having a wireless transmitter responsive to a plurality of audio input channels. The transmitter transmits a encoded digital bitstream and serially combines each of the audio input channels. The encoded digital bitstream further includes control data. A receiver, responsive to the transmitted encoded digital bitstream demultiflexes the digital bitstream. A manual selector switch is provided on the receiver for selecting one or more of the audio input channels to be reproduced, and a sound producing device selectively reproduces the one or more selected audio channels in accordance with the control data. The receiver further comprises user selectable switches to change the audio channel and LEDs to indicate the selected channel.

### SUMMARY

It is an object of the invention to provide a method for broadcasting audio to at least one headphone to improve the user experience of an event which uses headphones. Another object is to improve the user interface to verify the desired audio source he is listening to at events which uses a multitude of headphones where signals of multiple audio sources are transmitted simultaneously. In the present application, the term "headphone" is used for an arrangement with comprises two electro-acoustic transducers for converting electric signals into sounds, one transducer for the left ear and the other transducers for the right ear and corresponds to the term "a pair of headphones.

According to the invention, this object is achieved by a method having the features of Claim 1. Advantageous embodiments and further ways of carrying out the invention may be attained by the measures mentioned in the dependent claims.

According to a first aspect of the invention, there is provided a method for broadcasting an audio signal to at least one headphone. A transmitter receives the audio signal from an audio source. The transmitter further retrieves from three channels of a DMX signal from a DMX source a group of three values representing the intensity of a red LED, a green LED and a blue LED and generates a light control data block comprising the three values. The transmitter converts the audio signal and the light control data block to a DECT signal, and transmits the DECT signal. A headphone of the at least one headphone comprises a light source having at least one arrangement of a red-LED, green-LED and blue-LED. The headphone receives the DECT signal and reproduces the audio signal from the DECT signal, retrieves the group of three values from the light control data block in the DECT signal and controls the light source of the headphone in response to the retrieved three values.

The basic idea of the present application is to enhance the user experience at events. This is done by adding remote controllable light sources to the headphone. For example if a DMX source generates a DMX signal to control provide a lightshow in a space, this DMX signal could be received by the transmitter and subsequently transmitted via the DECT signal to the headphone. The light generated at the headphone is now controlled by the DMX source and has the similar light effects. In this way, the users become part of the light show.

In an embodiment, on the transmitter a transmission channel identification is selected. The transmitter adds the transmission channel identification to the DECT signal prior to transmission. At the head phone a transmission channel identification is selected. The headphone processes only the light control data block from a DECT signal carrying the selected transmission channel identification. The channel identification allows two transmitters to use the same physical DECT channel simultaneously. By adding the transmission channel identification, which value can freely be chosen, it is possible to link a headphone to a specific transmitter.

In an embodiment, a transmitter receives the audio signal from an audio source. A user selects on the transmitter a transmission channel identification. The transmitter converts the audio signal and the transmission channel identification to a DECT signal and transmits the DECT signal. A headphone receives the DECT signal and reproduces the audio signal. The headphone which is tuned at the DECT signal carrying the selected transmission channel identification generates light by means of a light source with a colour associated with the selected transmission channel identification. The presented features further provide an improved user interface. In Discos, it is normally relative dark. When there are several audio channels transmitted in the same room, it must be easy to verify which audio channel is selected by the headphone. This is done by linking audio channels to predefined colours. By using the channel identification in the DECT signal, which is set by the transmitter, the headphone show visual light corresponding to the received audio channel. By having information of which audio channel is using which colour, a user can easily check if his headphone is tuned to the desired audio channel. These features further enhance the user experience as it made visual which users are listening to the same audio channel. This information enables them get in contact with other people and start a discussion of a recently heard performance of an artist.

In an embodiment, the transmitter is configured to generate light with a colour associated with the transmission channel identification in the generated DECT signal. The colour is similar to the colour of the light generated by a headphone tuned at the DECT signal carrying the selected transmission channel identification. By having a similar table wherein the channel identifications are linked to predefined different colours and generating also light with the colour corresponding to the transmitted channel identification at the transmitter side, a user can easily visually verify whether he is listening to the desired audio source.

In an embodiment, the headphone comprises N individual controllable arrangements of a red-LED, green LED and blue LED. The transmitter retrieves from 3xN channels of the DMX signal N groups of three values representing the intensity of a red LED, a green LED and a blue LED. The transmitter transmits the N groups of three values in the light control data block to the headphone. The headphone retrieves the N groups of three values from the light control data block and controls the N individual controllable arrangements in response to the retrieved N groups of three values. These features enlarge the possible light effects of the LED attached to the headphone.

In an embodiment, a DECT frame is divided in two parts with equal time duration, a part comprises five long-slots and four half-slots. The audio signal comprises a left audio signal and a right audio signal, the transmitter transmitting the left audio signal by using one long slot and the right audio signal by using another long slot. Long-slots of an audio channel are transmitted each 5ms. In this way the audio delay in the system is less than 23ms, measure from the analogue input of the transmitter to the analogue output at the speaker of the headphone.

According to a second aspect, a transmitter for broadcasting an audio signal to at least one headphone is provided. The transmitter comprises an input configured for receiving the audio signal, a processing unit configured for converting the audio signal to a DECT signal and an antenna for transmitting the DECT signal to the at least one headphone. The transmitter further comprises a DMX input for receiving a DMX signal from a DMX source. The processing unit is further configured for retrieving from three channels of the DMX signal a group of three values representing the intensity of a red LED, a green LED and a blue LED, adding the three values to a light control data block and generating a DECT signal carrying the audio signal and the light control data block.

In an embodiment, the transmitter further comprises a selector to select a transmission channel identification. The processing unit is further configured to add the channel identification to the DECT signal

According to a third aspect, an headphone is provide which comprises an input antenna configured for receiving a DECT signal carrying an audio signal and a light control data block. The light control data block comprises a group of three values representing the intensity of a red LED, a green LED and a blue LED. A processing unit is configured for retrieving from the DECT signal the audio signal and generating corresponding electrical signals; and, electroacoustic transducers converting the electrical signals to sound. The processing unit is further configured for retrieving the light control data block from the DECT signal and to control an assembly of a red LED, green LED and blue LED to generate light corresponding to the three values representing the intensity of a red LED, a green LED and a blue LED in the light control data block.

It should be noted that US2005201569A1 discloses a headphone with a button for selecting one communication channel among a plurality of communication channels. A microcomputer sets the frequency of a communication unit to the selected communication channel and control a LED to blink with a colour assigned to the selected communication channel. Furthermore, US2004157555A1 discloses a multiple channel wireless communication system. A plurality of LEDs on a headphone (e.g. a number equal to the number of channels, may be used to indicate the selected channel of a headphone. The documents do not indicate nor suggest that the LEDs generate light in response to data transmitted via the communication channel.

Other features and advantages will become apparent from the following detailed description, taken in conjunction with the accompanying drawings which illustrate, by way of example, various features of embodiments.

### BRIEF DESCRIPTION OF THE DRAWINGS

These and other aspects, properties and advantages will be explained hereinafter based on the following description with reference to the drawings, wherein like reference numerals denote like or comparable parts, and in which:
Fig. 1 illustrates the components and connectivity in a system for broadcasting a multitude of audio signals to a multitude of headphones;
Fig. 2 illustrates a frame format and full slot format according to the DECT standard;
Fig. 3 illustrates an embodiment of a frame format and slot format according to the present application;
Fig. 4 is a block diagram illustrating an embodiment of a transmitter; and,
Fig. 5 is an embodiment of a conversion table for converting a DMX-value to a value for transmission over DECT.

### DETAILED DESCRIPTION

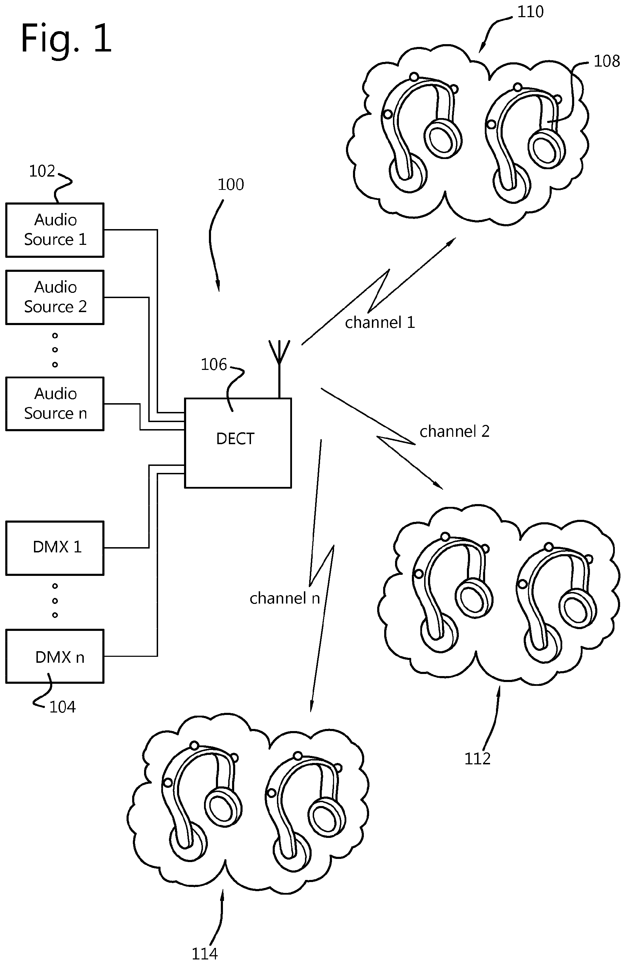

Fig. 1 illustrates the components and connectivity in system 100 for broadcasting a multitude of audio signals to a multitude of headphones. In the present application, the term "headphone" is used for an arrangement with two electro-acoustic transducers for converting electric signals into sounds, one transducer for the left ear and the other transducers for the right ear and corresponds to the term "a pair of headphones. The system comprises a multitude of audio sources 102. An audio source can be any type of sound. It can be the music created by a DJ, a composition of the music produced by a band, a composition of the music produced by a band wherein one or more music instruments or voices are amplified (highlighted), the voices of an interview, and so on. The signals from the audio sources are mostly stereo audio signals comprising a left-audio signal and a right-audio signal. However, the system might also be used to transmit a MONO-signal. The audio signals of the audio sources are transmitted via a wired connection to a DECT transmitter unit 106. DECT, Digital Enhanced Cordless Telecommunications, is a universal ETSI standard commonly known to the person skilled in the art. DECT divides the available radio spectrum into physical channels in two dimensions: frequency and time. Depending on the country, 5 or 10 carrier frequencies are used for transmission of the DECT signal.

The system further comprises a multitude of DMX inputs. DMX512 (Digital Multiplex) also known as DMX-512, is a standard for digital communication networks that are commonly used to control stage lighting and effects. Therefore, no further details will be given in this description.

The system further comprises a multitude of wireless headphones 108. The wireless headphones 108 have input means, for example a rotary knob or push button, to select a channel transmitted by the DECT transmitter unit 106. A wireless headphone 108 comprises three light sources in the form of RGB-LEDs that are attached on the construction (head strap) that connects the left- and right speaker module. There is a right RGB-LED, a left RGB LED and a top RGB-LED. The headphone is configured to generate light by means of the light sources with a colour associated with the selected transmission channel. The headphone will only process data from the DECT channel having the selected transmission channel identification in the DECT signal.

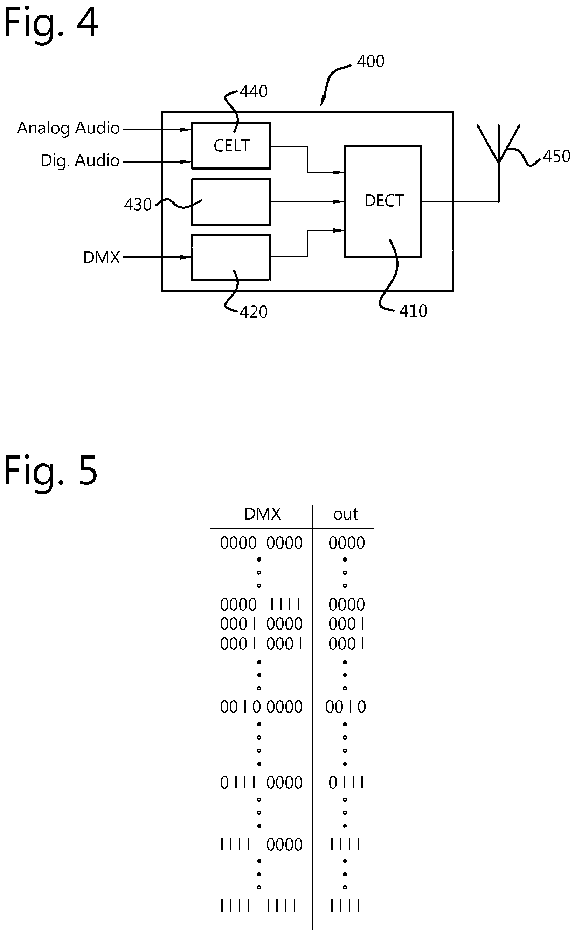

The DECT transmitter 106 could be a dedicated transmitter which generates simultaneously up to 8 DECT channel signals and transmits the up to 8 channel signals over the DECT frequency bands according to the DECT protocol. In another embodiment, the DECT transmitter 106 is a stack of 8 or more simple transmitters, wherein each simple transmitter generates and transmits one DECT channel signal. A block diagram of such a transmitter is illustrated in figure 4.

Shown is a DECT transmitter 106 that comprises for each channel a DMX input. However, it might be possible due to the nature of a DMX signal, that a dedicated DECT transmitter generating simultaneously up to 8 DECT channel signals that it retrieves all DMX data for all channels from one DMX signal.

The DMX data comprises light control information to control one or more light sources on the headphones.

Figure 1 illustrates further three groups of users 110, 112 and 114 wherein the users in each groups are listening to the same DECT channel. The system according to the present application enables to transmit simultaneously the performance of a band or orchestra in up to 8 different variations/compositions. The user can then select the channel to listen to the desired variation/composition.

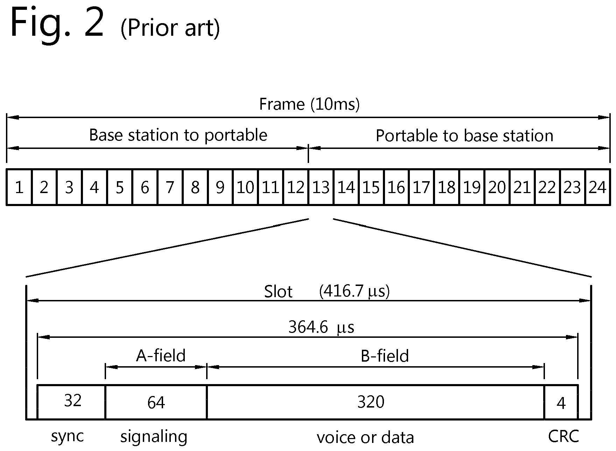

Figure 2 shows a normal DECT frame. Such a frame has a duration of 10ms and comprises 24 slots of 416,7µs. The first 12 slots in a frame are available for transmitting data from the base station to the portable device and the last 12 slots of a frame are available for transmitting data from the portable device to the base station. The DECT signal of a channel transmitted in a slot has a duration of 364,6µs. In this time period, the signal comprises subsequently a 32 bit sync/preamble, a 64 bit A-field, a 320bit B-field and a 4bit CRC (cyclic redundancy check). After the slot, a Z-field (not shown) of 4 bits is transmitted. The Z-field is a repetition of the 4bit CRC. The 64 bit A-field is used to transmit signalling information which includes a transmission channel identification.

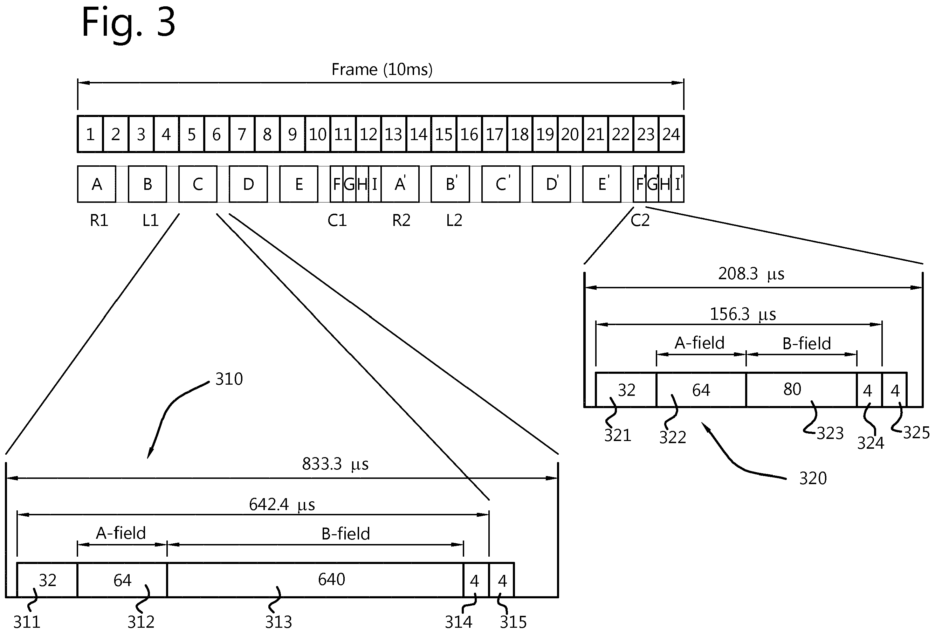

Figure 3 shows an embodiment of a frame format and slot format according to the present application. As the multitude of headphones only has to receive data and not to submit data back to the transmitter, all 24 slots have been made available to transmit audio and DMX data from the transmitter (base station) to a multitude of headphones. The frame is divided in two equal parts of 5ms. In each part of 5ms, five long-slots A-E and four half-slots F-I are available for a transmitted DECT signal. The long slots will be used for transmitting audio data and the half-slots will be used for transmitting light control data. A long-slot 310 fits in the space of two DECT slots and has a duration of 642,4µs. In this time period, the signal comprises subsequently a 32 bit sync/preamble 311, a 64 bit A-field 312, a 640 bit B-field and a 4bit CRC. After the long-slot, a Z-field of 4 bits is transmitted. The Z-field is a repetition of the 4bit CRC.

Two half-slots fit in the space of one DECT slots. A half-slot has a duration of 156,3µs. In this time period, the signal comprises subsequently a 32 bit sync/preamble 321, a 64 bit A-field 322, an 80 bit B-field and a 4bit CRC. After the long-slot, a Z-field of 4 bits is transmitted. The Z-field is a repetition of the 4bit CRC. The four half slots F-I in the first 5ms of a DECT frame are available for transmitting light control information. The four half slots F'- I' in the second 5ms of a DECT frame are available for future use.

For transmitting the Left audio signal in DECT channel a pair of long-slots in each frame will be used. In this way, 128Kbps are available for transmitting the Left audio signal and 128Kbps are available for transmitting the Right audio signal. Furthermore, the first long-slot for the left/right audio signal is transmitted in the first half of a DECT frame and the second left/right long-slot for the left-right audio signal is transmitted in the second half of a DECT frame. Furthermore, the position of the long-slot for a particular audio signal in the first half and second half of the DECT frame is the same. In fig. 3, long-slots A and A' are used for transmitting the audio signal of the Right audio signal R1,R2 and long-slots B and B' are used for transmitting the audio signal of the Left audio signal L1, L2. In this way every 5ms a block with audio data is received by the headphone, which makes to reproduction of the audio signal easy and the transmission delay short, which is essential for music events. It should be noted that each 20 seconds is determined which long-slots and half-slots in the DECT frame could best be used at which carrier frequency. So each 20 second, the same long-slot pair, for example A, A', is used to transmit an audio channel in the DECT frame. In the subsequent 20 second a long-slot pair at another position in the DECT frame can be used, for example C and C'. So within the period of 20 second, each 5ms a block of 640bits audio data is received at the headphone.

For transmitting light control information, only one half-slot F-I in a DECT frame will be used in a DECT channel. The B-field 323 of a half-slot comprises 80bits, the first 64bits are used to transmit light control information and the remaining 16 bits are CRC bits. The 16 CRC bits are necessary to guarantee correct reception of the light control information at the ear-phone. If data bits are incorrectly received at a headphone, this will have negative influence on the light generated by the ear-phone.

The light control information is transmitted in blocks of 320bits. Thus 5 half-slots in five subsequent DECT frames have to be used to transmit one block of 320bits. In this way, the light generated by the headphone can be changed 20 times per second. The maximum amount of light control data that can be transmitted is 6,4Kbits/s.

The use of long-slots has the advantage that there is enough time between two subsequent long-slots to have a change in the DECT signal from carrier frequency which can be followed by a normal DECT receiver. When selecting the position of the four long-slots for L/R audio and the only half-slot for the light control information, the transmitter must avoid that when long-slots at position A and A' are selected for an audio channel, the half-slot at position I will not be used.

Fig. 4 is a block diagram illustrating an embodiment of a transmitter. 400. The transmitter comprises an analogue audio input and a digital audio input. The transmitter encodes digitally the audio signal, from the digital source or analogue source. The digital audio input could be any suitable interface to transmit digital audio. Two examples of possible interfaces are AES3 or S/PDIF. There is no specific selection of the audio input. The users should take care on using either the digital or an analogue input but not both simultaneously. In any event if both are connected the digital audio input takes precedence and disables the analogue input. The audio encoder 440 uses CELT (Constrained Energy Lapped Transform) to generate the digital audio signal to be transmitted via the DECT signal.

The transmitter further comprises a transmission channel identification selector 430. A user can select a transmission channel identification TXID which is transmitted in the A-field of the DECT signal. At the front of the transmitter a (RGB) Led indicates the current TXID. The transmitter comprises lookup table wherein channel identifications are uniquely linked to predefined colours. The Led shines steady and reproduces the corresponding colour of that TXID. If during the operation the TXID is changed the new set TXID colour and the current set TXID colour is shown via the LED. The TXID transmitted in the A-field of the DECT signal will not change. The current set TXID colour shines 3 seconds after that it shows the new set TXID colour for 1 second. This sequence continues until the transmitter is off/on (taking the new set TXID colour) or the selector is set back to the currently transmitted TXID. When the TXID selector is set back to the currently transmitted TXID, the Led shines steady the current set TXID colour again.

The transmitter is equipped with a DMX512, RS485 based balanced signal interface 420. The sample frequency of the used DMX channels is downgraded to 20 samples/s to limit the data flow. The interface is used to send light control information to the headphones. In the transmitter the data rate of DMX shall be limited to the available transmitter bandwidth for this purpose < 6,4 kbps (raw data). At the transmitter the DMX start address can be defined using dip-switches (poles 1 to 9). However other implementations are possible. The addresses of all LED's are preferably in the DMX address range from the relative DMX-address 1 to 9. LED brightness depth in DMX is 8 bits which is reduced to 4 bits for transmission in the light control data block. Figure 5 shows an embodiment of a lookup table for converting the DMX value for the brightness of the LED to a value for transmission via DECT. The conversion could also be done by cutting off the right 4 least significant bits from the 8 bit DMX value to obtain the 4 bit value for transmission over DECT. The values 00000000 and 0000 correspond to LED off and the values 11111111 and 1111 correspond to maximum intensity level. When having three individually controllable light source arrangements with at least one red-LED, green-LED and blue LED, 9 light control values needs to be transmitted via the light control data block. With 4 bits values, 36 bits have to be used for the three individually controllable arrangements. The transmitter retrieves from 3xN channels of the DMX signal N groups of three values representing the intensity of a red LED, a green LED and a blue LED, where N = 3. The transmitter converts the DMX value to suitable values for transmitting the N groups of three values in the light control data block to the headphone. The headphone retrieves the N groups of three values from the light control data block and controls the N individual controllable arrangements in response to the retrieved N groups of three values. The light control data block comprises 320 bits. With 4 bits light control values, which corresponds to 16 different light intensities, up to 26 RGB LEDs could be controlled individually on the headphone. It is clear, to the skilled person, that light control values with more than 4 bits could be transmitted in the light control data block. It should be noted, a light source arrangement could also comprise a laser LED or other colour LED's. In that case also for these LED's DMX data should be present in the DMX signal and retrieved to transmit the light corresponding light control values in the light control data block.

A processing unit 410 retrieves the encoded L and R audio signal, channel identification and light control data block and converts these signals to a DECT signal. Via antenna 450 the DECT signal is transmitted to at least one headphone.

A headphone comprises an input antenna configured for receiving a DECT signal carrying an audio signal, a processing unit configured for retrieving from the DECT signal the audio signal and generating corresponding electrical signals; and, electroacoustic transducers converting the electrical signals to sound. The processing unit is further configured for retrieving the light control data block from the DECT signal and to control an assembly of a red LED, green LED and blue LED to generate light corresponding to the three values representing the intensity of a red LED, a green LED and a blue LED in the light control data block.

In figure 3, an embodiment is given for a frame format which starts with 5 long-slots followed by 4 half-slots in the first 5ms and the same sequence of slots in the second 5ms. It should be noted, that any other sequence comprising 5 long-slots and 4 contiguous half-slots for a half of a DECT frame could be used. However, all transmitters should use the same frame format.

While the invention has been described in terms of several embodiments, it is contemplated that alternatives, modifications, permutations and equivalents thereof will become apparent to those skilled in the art upon reading the specification and upon study of the drawings. The invention is not limited to the illustrated embodiments. Changes can be made without departing from the scope of the appended claims.

## Claims

1. A method for broadcasting an audio signal to at least one headphone (108, 110, 112, 114), the method comprising:
- a transmitter (106) receiving the audio signal from an audio source (102);
- the transmitter converting the audio signal to a DECT signal; and,
- the transmitter transmitting the DECT signal;
- the at least one headphone receiving the DECT signal and reproducing the audio signal;
**characterized in that** the method further comprises:
- the transmitter retrieving from three channels of a DMX signal from a DMX source (104) a group of three values representing the intensity of a red LED, a green LED and a blue LED;
- the transmitter adding the group of three values to a light control data block;
- the transmitter converting the audio signal together with the light control data block to obtain the DECT signal; and,
- the at least one headphone retrieving the group of three values from the light control data block in the DECT signal and in response to the retrieved three values controlling a light source of the headphone comprising at least one arrangement of a red-LED, green-LED and blue-LED.

2. The method according to claim 1, wherein the method further comprises:
- selecting on the transmitter a transmission channel identification;
- the transmitter adding the transmission channel identification to the DECT signal prior to transmission;
- selecting at a headphone a transmission channel identification and
- the headphone processing the light control data block only from a DECT signal carrying the selected transmission channel identification.

3. The method according to claim 1 or 2, wherein the headphone comprises N individual controllable arrangements of a red-LED, green LED and blue LED, the method further comprises:
- the transmitter retrieving from 3xN channels of the DMX signal N groups of three values representing the intensity of a red LED, a green LED and a blue LED;
- the transmitter transmitting the N groups of three values in the light control data block to the headphone; and
- the headphone retrieving the N groups of three values from the light control data block and controlling the N individual controllable arrangements in response to the retrieved N groups of three values.

4. The method according to any of the claims 1 - 3, wherein the light control data block is transmitted in half-slots.

5. The method according to claim 4, wherein the DECT signal uses one half slots of a DECT frame to transmit the light control data block.

6. The method according to any of the claims 1 - 5, wherein the intensity of a LED is represented by at least 4 bits in the light control data block.

7. The method according to any of the claims 1 - 6, wherein a DECT frame is divided in two parts with equal time duration, a part comprises five long-slots and four half-slots, the audio signal comprises a left audio signal and a right audio signal, the transmitter transmitting the left audio signal by using one long slot and the right audio signal by using another long slot.

8. The method according to claim 7, wherein long-slots of the left audio signal are transmitted each 5ms and long-slots of the right audio signal are transmitted each 5ms.

9. A transmitter (106) for broadcasting an audio signal to at least one headphone, the transmitter comprising:
- an input configured for receiving the audio signal;
- a processing unit configured for converting the audio signal to a DECT signal; and,
- an antenna for transmitting the DECT signal to the at least one headphone, **characterized in that** the transmitter further comprises:
- a DMX input for receiving a DMX signal from a DMX source;
- the processing unit is configured for retrieving from three channels of the DMX signal a group of three values representing the intensity of a red LED, a green LED and a blue LED, adding the three values to a light control data block and further configured for converting the audio signal and the light control data block to the DECT signal.

10. A transmitter according to claim 9, wherein the transmitter further comprises a selector to select a transmission channel identification, the processing unit is further configured to add the channel identification to the DECT signal.

11. A DECT headphone (108) for reproducing an audio signal transmitted by a transmitter, the headphone comprises:
- an input antenna configured for receiving a DECT signal carrying an audio signal;
- a processing unit configured for retrieving from the DECT signal the audio signal and generating corresponding electrical signals; and,
- electroacoustic transducers converting the electrical signals to sound; **characterized in that**, the DECT signal further carries a light control data block comprising a group of three values representing the intensity of a red LED, a green LED and a blue LED;
- the processing unit is further configured for retrieving the light control data block from the DECT signal and to control an assembly of a red LED, green LED and blue LED to generate light corresponding to the three values representing the intensity of a red LED, a green LED and a blue LED in the light control data block.

12. The DECT headphone according to claim 11, wherein the DECT signal further carries a transmission channel identification, the headphone comprises a selector to select a transmission channel identification and the processing unit controls the assembly of red LED, green LED and blue LED in response to the values in the light control data block if the transmission channel identification in the DECT signal corresponds to the selected transmission channel identification.

## Patentansprüche

1. Verfahren zum Senden eines Tonsignals an mindestens einen Kopfhörer (108, 110, 112, 114), das Verfahren umfassend:
- einen Sender (106), der das Tonsignal von einer Tonquelle empfängt (102);
- wobei der Sender das Tonsignal in ein DECT-Signal konvertiert; und
- der Sender das DECT-Signal sendet;
- der mindestens einen Kopfhörer das DECT-Signal empfängt und das Tonsignal reproduziert;
**dadurch gekennzeichnet, dass** das Verfahren ferner umfasst:
- durch den Sender Abrufen einer Gruppe von drei Werten, die die Intensität einer roten LED, einer grünen LED und einer blauen LED darstellen, von drei Kanälen eines DMX-Signals von einer DMX-Quelle (104) durch den Sender;
- durch den Sender Hinzufügen der Gruppe von drei Werten zu einem Lichtsteuerdatenblock;
- durch den Sender Umwandeln des Tonsignals zusammen mit dem Lichtsteuerdatenblock zum Beschaffen des DECT-Signals; und
- durch den mindestens einen Kopfhörer Abrufen der Gruppe von drei Werten von dem Lichtsteuerdatenblock in dem DECT-Signal und Steuerung einer Lichtquelle des Kopfhörers, die mindestens eine Anordnung einer roten LED, grünen LED und blauen LED umfasst, in Reaktion auf die abgerufenen drei Werte.

2. Verfahren nach Anspruch 1, wobei das Verfahren ferner umfasst:
- Auswahl einer Sendekanalidentifizierung auf dem Sender;
- Hinzufügen der Sendekanalidentifizierung zu dem DECT-Signal durch den Sender vor der Übertragung;
- Auswahl einer Sendekanalidentifizierung an einem Kopfhörer und
- Verarbeitung des Lichtsteuerdatenblocks nur von einem DECT-Signal, das die gewählte Sendekanalidentifizierung trägt, durch den Kopfhörer.

3. Verfahren nach Anspruch 1 oder 2, wobei der Kopfhörer N einzeln steuerbare Anordnungen einer roten LED, grünen LED und blauen LED umfasst, wobei das Verfahren ferner umfasst:
- Abrufen durch den Sender von drei Werten, die die Intensität einer roten LED, einer grünen LED und einer blauen LED darstellen, von 3xN Kanälen der DMX-Signal-N-Gruppen;
- Senden durch den Sender der N Gruppen von drei Werten in einem Lichtsteuerdatenblock an den Kopfhörer; und
- Abrufen durch den Kopfhörer der N Gruppen der drei Werte von dem Lichtsteuerdatenblock und Steuerung der N einzeln steuerbaren Anordnungen in Reaktion auf die abgerufenen N Gruppen von drei Werten.

4. Verfahren nach einem der Ansprüche 1 - 3, wobei der Lichtsteuerdatenblock in Halbschlitzen übertragen wird.

5. Verfahren nach Anspruch 4, wobei das DECT-Signal einen Halbschlitz eines DECT-Rahmens verwendet, um den Lichtsteuerdatenblock zu übermitteln.

6. Verfahren nach einem der Ansprüche 1 - 5, wobei die Intensität einer LED durch mindestens 4 Bits in dem Lichtsteuerdatenblock dargestellt ist.

7. Verfahren nach einem der Ansprüche 1 - 6, wobei ein DECT-Rahmen in zwei Abschnitte mit gleicher Zeitdauer unterteilt ist, ein Abschnitt fünf Langschlitze und vier Halbschlitze umfasst, das Tonsignal ein linkes Tonsignal und ein rechtes Tonsignal umfasst, der Sender das linke Tonsignal durch Verwendung eines langen Schlitzes und das rechte Tonsignal durch Verwendung eines anderen langen Schlitzes sendet.

8. Verfahren nach Anspruch 7, wobei Langschlitze des linken Tonsignals alle 5 ms übertragen werden und Langschlitze des rechten Tonsignals alle 5 ms übertragen werden.

9. Sender (106) zum Senden eines Tonsignals an mindestens einen Kopfhörer, der Sender umfassend:
- eine Eingabe, konfiguriert zum Empfangen des Tonsignals;
- eine Verarbeitungseinheit, konfiguriert zur Konvertierung des Tonsignals in ein DECT-Signal; und
- eine Antenne zum Senden des DECT-Signals an den mindestens einen Kopfhörer,
**dadurch gekennzeichnet, dass** der Sender ferner umfasst:
- eine DMX-Eingabe für den Empfang eines DMX-Signals von einer DMX-Quelle;
- wobei die Verarbeitungseinheit zum Abrufen einer Gruppe von drei Werten, die die Intensität einer roten LED, einer grünen LED und einer blauen LED darstellen, von drei Kanälen der DMX Signale und zum Hinzufügen der drei Werte zu einem Lichtsteuerdatenblock konfiguriert ist und ferner zum Umwandeln des Tonsignals und des Lichtsteuerdatenblocks in das DECT-Signal konfiguriert ist.

10. Sender nach Anspruch 9, wobei der Sender ferner einen Auswähler umfasst, um eine Sendekanalidentifizierung zu wählen, und die Verarbeitungseinheit ferner konfiguriert ist, die Kanalidentifizierung zu dem DECT-Signal hinzuzufügen.

11. DECT-Kopfhörer (108) zum Reproduzieren eines Tonsignals, das durch einen Sender gesendet wird, wobei der Kopfhörer umfasst:
- eine Eingabeantenne, konfiguriert zum Empfang eines DECT-Signals, das ein Tonsignal trägt;
- eine Verarbeitungseinheit, konfiguriert zum Abrufen des Tonsignals von dem DECT-Signal und Erzeugen entsprechender elektrischer Signale; und
- elektroakustische Transducer, die die elektrischen Signale in Ton umwandeln;
**dadurch gekennzeichnet, dass** das DECT-Signal ferner einen Lichtsteuerdatenblock trägt, der eine Gruppe von drei Werten umfasst, die die Intensität einer roten LED, einer grünen LED und einer blauen LED darstellen;
- wobei die Verarbeitungseinheit ferner zum Abrufen des Lichtsteuerdatenblocks von dem DECT-Signal und zur Steuerung einer Baugruppe einer roten LED, grünen LED und blauen LED zum Erzeugen von Licht konfiguriert ist, das den drei Werten entspricht, die der Intensität einer roten LED, einer grünen LED und einer blauen LED in dem Lichtsteuerdatenblock entsprechen.

12. DECT-Kopfhörer nach Anspruch 11, wobei das DECT-Signal ferner eine Sendekanalidentifizierung trägt, der Kopfhörer einen Auswähler umfasst, um eine Sendekanalidentifizierung zu wählen, und die Verarbeitungseinheit die Baugruppe aus einer roten LED, einer grünen LED und einer blauen LED in Reaktion auf die Werte in dem Lichtsteuerdatenblock umfasst, wenn die Sendekanalidentifizierung in dem DECT-Signal der gewählten Sendekanalidentifizierung entspricht.

## Revendications

1. Procédé pour diffuser un signal audio sur au moins un écouteur (108, 110, 112, 114), le procédé comprenant :
- la réception du signal audio d'une source audio (102) par un émetteur (106) ;
- la conversion du signal audio en un signal DECT par l'émetteur ; et,
- l'émission du signal DECT par l'émetteur ;
- la réception du signal DECT par au moins un écouteur et la reproduction du signal audio ;
**caractérisé en ce que** le procédé comprend en outre les opérations suivantes :
- l'émetteur récupère sur trois canaux d'un signal DMX d'une source DMX (104) un groupe de trois valeurs représentant l'intensité d'une DEL rouge, d'une DEL verte et d'une DEL bleue ;
- l'émetteur ajoute le groupe de trois valeurs à un bloc de données de contrôle de la lumière ;
- l'émetteur convertit le signal audio avec le bloc de données de contrôle de lumière pour obtenir le signal DECT ; et,
- l'écouteur ou les écouteurs récupèrent le groupe de trois valeurs à partir du bloc de données de contrôle de la lumière dans le signal DECT et en réponse aux trois valeurs récupérées commandent une source lumineuse de l'écouteur comprenant au moins un agencement d'une DEL rouge, d'une DEL verte et d'une DEL bleue.

2. Procédé selon la revendication 1, dans lequel le procédé comprend en outre :
- la sélection, sur l'émetteur, d'une identification de canal de transmission ;
- l'ajout, par l'émetteur, de l'identification du canal de transmission au signal DECT avant la transmission ;
- la sélection, sur un écouteur, d'une identification de canal de transmission et
- le traitement, par l'écouteur, du bloc de données de contrôle de la lumière uniquement à partir d'un signal DECT portant l'identification du canal de transmission sélectionné.

3. Procédé selon la revendication 1 ou 2, dans lequel l'écouteur comprend N agencements individuels contrôlables d'une DEL rouge, d'une DEL verte et d'une DEL bleue, et le procédé comprend en outre :
- l'émetteur récupère sur 3 x N canaux du signal DMX, N groupes de trois valeurs représentant l'intensité d'une DEL rouge, d'une DEL verte et d'une DEL bleue ;
- la transmission de l'émetteur à l'écouteur de N groupes de trois valeurs du bloc de données de contrôle de la lumière ; et
- la récupération de la part de l'écouteur des N groupes de trois valeurs à partir du bloc de données de contrôle de la lumière et le contrôle des N arrangements individuels contrôlables en réponse aux N groupes de trois valeurs ainsi récupérés.

4. Procédé selon l'une quelconque des revendications 1 - 3, dans lequel le bloc de données de contrôle de la lumière est transmis en demi-tranches.

5. Procédé selon la revendication 4, dans lequel le signal DECT utilise une demi-tranche d'une trame DECT pour transmettre le bloc de données de contrôle de la lumière.

6. Procédé selon l'une quelconque des revendications 1 - 5, dans lequel l'intensité d'une DEL est représentée par au moins 4 bits dans le bloc de données de contrôle de la lumière.

7. Procédé selon l'une quelconque des revendications 1 - 6, dans lequel une trame DECT est divisée en deux parties de durée égale, une partie comprend cinq tranches longues et quatre demi-tranches, le signal audio comprend un signal audio gauche et un signal audio droit, l'émetteur transmettant le signal audio gauche en utilisant une tranche longue et le signal audio droit en utilisant une autre tranche longue.

8. Procédé selon la revendication 7, dans lequel les tranches longues du signal audio gauche sont transmises toutes les 5 ms et les tranches longues du signal audio droit sont transmises toutes les 5 ms.

9. Émetteur (106) pour diffuser un signal audio sur au moins un écouteur, l'émetteur comprenant :
- une entrée configurée pour recevoir le signal audio ;
- une unité de traitement configurée pour convertir le signal audio en un signal DECT ; et,
- une antenne pour transmettre le signal DECT à l'écouteur ou aux écouteurs,
**caractérisé en ce que** l'émetteur comprend en outre :
- une entrée DMX pour recevoir un signal DMX d'une source DMX ;
- l'unité de traitement est configurée pour récupérer sur trois canaux du signal DMX un groupe de trois valeurs représentant l'intensité d'une DEL rouge, d'une DEL verte et d'une DEL bleue, ajouter les trois valeurs à un bloc de données de contrôle de la lumière et configurée pour convertir le signal audio et le bloc de données de contrôle de la lumière en signal DECT.

10. Émetteur selon la revendication 9, dans lequel l'émetteur comprend en outre un sélecteur pour sélectionner une identification de canal de transmission, l'unité de traitement est en outre configurée pour ajouter l'identification de canal au signal DECT.

11. Écouteur DECT (108) pour reproduire un signal audio transmis par un émetteur, l'écouteur comprend :
- une antenne d'entrée configurée pour recevoir un signal DECT portant un signal audio ;
- une unité de traitement configurée pour extraire du signal DECT le signal audio et générer des signaux électriques correspondants ; et,
- des transducteurs électroacoustiques convertissant les signaux électriques en sons ;
**caractérisé en ce que** le signal DECT comporte en outre un bloc de données de contrôle de la lumière comprenant un groupe de trois valeurs représentant l'intensité d'une DEL rouge, d'une DEL verte et d'une DEL bleue ;
- l'unité de traitement est en outre configurée pour extraire le bloc de données de contrôle de la lumière du signal DECT et pour commander un ensemble d'une DEL rouge, d'une DEL verte et d'une DEL bleue pour générer une lumière correspondant aux trois valeurs représentant l'intensité d'une DEL rouge, d'une DEL verte et d'une DEL bleue dans le bloc de données de contrôle de la lumière.

12. Écouteur DECT selon la revendication 11, dans lequel le signal DECT porte en outre une identification du canal de transmission, l'écouteur comprend un sélecteur pour sélectionner une identification du canal de transmission et l'unité de traitement commande le groupe formé d'une DEL rouge, d'une DEL verte et d'une DEL bleue en réponse aux valeurs du bloc de données de contrôle de la lumière si l'identification du canal de transmission dans le signal DECT correspond à l'identification du canal de transmission sélectionné.
